(19) Europäisches Patentamt
European Patent Office
Office européen des brevets

(11) **EP 4 368 444 A1**

(12) **EUROPEAN PATENT APPLICATION**

(43) Date of publication:
**15.05.2024 Bulletin 2024/20**

(21) Application number: **23164351.1**

(22) Date of filing: **27.03.2023**

(51) International Patent Classification (IPC):
***B60L 58/27*** (2019.01)

(52) Cooperative Patent Classification (CPC):
**B60L 58/27;** B60L 2240/36; B60L 2240/525;
B60L 2240/545; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2022 CN 202211394548**

(71) Applicant: **Xiaomi EV Technology Co., Ltd.
100176 Beijing (CN)**

(72) Inventors:
• **CHEN, Qu
Beijing, 100176 (CN)**
• **REN, Xuebei
Beijing, 100176 (CN)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(54) **BATTERY SELF-HEATING METHOD, AND VEHICLE**

(57) A battery self-heating method includes: obtaining (S 101) a temperature and a state of charge of a battery; determining (S 102) a current amplitude and a frequency during self-heating of the battery according to the temperature and the state of charge; and performing (S103) a closed-loop control on a battery self-heating device according to the current amplitude and the frequency, so as to self-heat the battery.

Fig. 1

**Description**

**TECHNICAL FIELD**

The present invention relates to the field of vehicles, and more particularly, to a battery self-heating method and a vehicle.

**BACKGROUND**

Living standards around the world are improving continuously due to ongoing technological developments, such that more and more individuals own vehicles. Further, vehicles operating under electric power are popular. Electric vehicles need to be charged before they can be driven. However, the charging speed has gradually become a deficiency in the development of electric vehicles, especially the problem of the battery performance degradation in low temperature environments, which affects the charging and driving performances of the electric vehicle.

**SUMMARY**

It is the object of the present invention to provide a battery self-heating method and a vehicle, which are mainly aimed at improving the self-heating efficiency of the battery. This object is achieved by the features of the independent claims. Further developments of the invention are set forth in the dependent claims.

According to a first aspect of the present invention, a battery self-heating method is provided. The battery self-heating method includes: obtaining a temperature and a state of charge of a battery; determining a current amplitude and a frequency during self-heating of the battery according to the temperature and the state of charge; and performing a closed-loop control on a battery self-heating device according to the current amplitude and the frequency, so as to self-heat the battery.

Optionally, determining a current amplitude and a frequency during self-heating of the battery according to the temperature and the state of charge includes: obtaining a battery voltage of the battery and a voltage threshold of a bus side of the battery self-heating device in response to the battery entering a self-heating mode; determining a duty ratio threshold of the battery self-heating device according to the battery voltage and the voltage threshold; determining a correspondence between the current amplitude and the frequency according to the duty ratio threshold; and determining the current amplitude and the frequency during the self-heating of the battery according to the temperature and the state of charge, based on the correspondence between the current amplitude and the frequency.

Optionally, determining a correspondence between the current amplitude and the frequency according to the duty ratio threshold includes: determining a duty ratio DC component function and a duty ratio AC component function according to the duty ratio threshold; and determining the correspondence between the current amplitude and the frequency according to the duty ratio DC component function and the duty ratio AC component function.

Optionally, performing a closed-loop control on the battery self-heating device according to the current amplitude and the frequency includes: obtaining an input current value input to the battery self-heating device, the input current value including a first phase current value, a second phase current value and a third phase current value; determining a current error value according to the input current value and the current amplitude; determining a duty ratio of a bridge arm in the battery self-heating device according to the current error value and the frequency; and performing the closed-loop control on the bridge arm in the battery self-heating device according to the duty ratio of the bridge arm.

Optionally, determining a current error value according to the input current value and the current amplitude includes: summing the first phase current value, the second phase current value and the third phase current value, so as to obtain a total value of the three phase currents; and obtaining a difference between the total value of the three phase currents and the current amplitude, so as to obtain the current error value.

Optionally, determining a duty ratio of a bridge arm in the battery self-heating device according to the current error value and the frequency includes: performing a proportional integral calculation or a proportional integral differential calculation on the current error value, so as to obtain a duty ratio AC component amplitude; determining an AC function of the frequency based on the correspondence between the current amplitude and the frequency, and multiplying the duty ratio AC component amplitude with the AC function, so as to obtain a duty ratio AC component; and determining a duty ratio DC component of the battery self-heating device, and determining the duty ratio of the bridge arm according to the duty ratio DC component and the duty ratio AC component.

Optionally, performing a closed-loop control on the bridge arm in the battery self-heating device according to the duty ratio of the bridge arm includes: converting the duty ratio of the bridge arm into a duty ratio of a first phase bridge arm, a duty ratio of a second phase bridge arm and a duty ratio of a third phase bridge arm according to the input current value; and performing the closed-loop control on the bridge arm in the battery self-heating device respectively according to the duty ratio of the first phase bridge arm, the duty ratio of the second phase bridge arm and the duty ratio of the third phase bridge arm.

According to a second aspect of the present invention, a vehicle is provided. The vehicle includes a battery, a battery self-heating device, a motor and a control unit. A first end of the motor is connected to a positive electrode of the battery, a second end of the motor is connected to a first end of the battery self-heating device, and a negative electrode of the battery is connected to a second end of the battery self-heating device. The control unit is connected to the battery self-heating device, and configured to control the battery self-heating device to self-heat the battery according to a current input from the motor, by using the battery self-heating method according to any one of the above embodiments of the first aspect of the present invention.

Optionally, the battery self-heating device includes: three bridge arms and a bus capacitor. Three bridge arm midpoints of the three bridge arms are connected to the second end of the motor, respectively, first ends of the three bridge arms are connected to a positive electrode of the bus capacitor, respectively, and control ends of the three bridge arms are connected to the control unit, respectively. Second ends of the three bridge arms are connected to a negative electrode of the bus capacitor, respectively, to form the second end of the battery self-heating device.

It should be understood that the content described in this section is not intended to identify the key or important features of the embodiments of the present invention, nor is it intended to limit the scope of the present invention. Other features of the present invention will become apparent through the following description.

## BRIEF DESCRIPTION OF THE DRAWINGS

Accompanying drawings are used to better understand the solution and do not limit the present invention.

Fig. 1 shows a flow chart of a first battery self-heating method according to an embodiment of the present invention.
Fig. 2 shows a flow chart of a second battery self-heating method according to an embodiment of the present invention.
Fig. 3 shows a control flow chart of a battery self-heating device according to an embodiment of the present invention.
Fig. 4 shows a simulation diagram of battery self-heating according to an embodiment of the present invention.
Fig. 5 shows a schematic view of a first battery self-heating system according to an embodiment of the present invention.
Fig. 6 shows a schematic view of a second battery self-heating system according to an embodiment of the present invention.
Fig. 7 shows a schematic view of a third battery self-heating system according to an embodiment of the present invention.
Fig. 8 shows a schematic view of a first vehicle according to an embodiment of the present invention.
Fig. 9 shows a schematic view of a second vehicle according to an embodiment of the present invention.
Fig. 10 shows a schematic view of a third vehicle according to an embodiment of the present invention.
Fig. 11 is a block diagram of a vehicle configured to implement a battery self-heating method according to an embodiment of the present invention.

## DETAILED DESCRIPTION

The following describes illustrative embodiments of the present invention in combination with the accompanying drawings, including various details of the embodiments of the present invention to facilitate understanding. They should be considered as only illustrative. Therefore, those skilled in the art should recognize that various changes and modifications can be made to the embodiments described herein without departing from the scope of the present invention as defined by the appended claims. Similarly, for clarity and conciseness, the descriptions of functions and structures known in the related art are omitted in the following description.

Ongoing developments in the field of electric vehicles are becoming more and more rapid, which results in increased requirements placed on the vehicles by users. In the related art, a lithium battery is mainly adopted as a power battery of an electric vehicle. The working characteristics of the lithium battery are significantly affected by its ambient temperature. Especially at a low temperature, the electrochemical reaction activity of the lithium battery is reduced, and the charging and discharging performance decays very seriously. Charging at a low temperature may lead to the precipitation and accumulation of lithium ions, which seriously affects the service life of the power battery, thus causing an irreversible damage, and even causing a safety accident. Therefore, the use of electric vehicles in areas of high altitude and cold temperatures is strongly constrained. In order to provide a better charging and discharging performance of an electric vehicle battery in low temperature environments, it is necessary to heat the battery.

In some embodiments, a heating mode in which the electric vehicle heats the battery may be external heating, such as thermistor heating or water circulation system heating. Or, a battery self-heating device is adopted to self-heat the battery, i.e., a value of a current flowing through a self-heating circuit of a battery pack is adjusted by controlling a duty ratio of a control signal of a pulse width modulation of a motor controller. The control of the duty ratio is equivalent to the control of a conduction time of an upper bridge arm and a lower bridge arm. When the self-heating circuit of the battery pack is in operation, the current in the self-heating circuit of the battery pack is increased or decreased by lengthening or shortening the conduction time of the upper bridge arm or the lower bridge arm, and then the heating power generated by the battery pack may be adjusted.

It is easy to understand that the heating speed of the thermistor heating or the water circulation system heating is relatively slow and its power consumption is also relatively high. When the battery self-heating device is adopted to self-heat the battery, the battery cannot be heated according to the state of the battery and the impedance characteristics of the battery at different frequencies, which leads to a poor efficiency of the battery self-heating.

The present invention is described in detail in combination with specific embodiments.

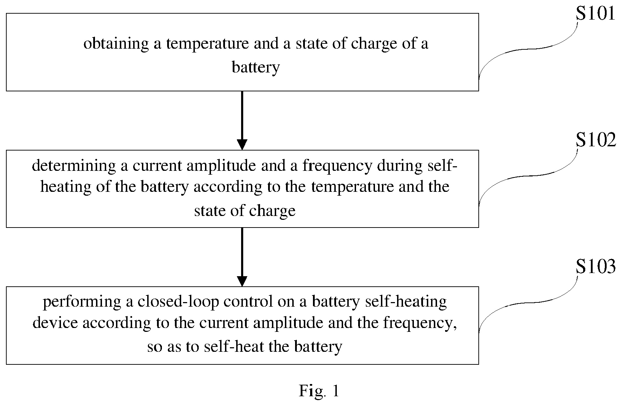

Fig. 1 shows a flow chart of a first battery self-heating method according to an embodiment of the present invention. The method may be implemented by a computer program and may be run on the vehicle performing the battery self-heating method. The computer program may be integrated into an application or run as an independent tool application.

The vehicle includes but is not limited to: a cargo vehicle, an off-road vehicle, a dump vehicle, a tractor, a special vehicle, a passenger car, a car, a semi-trailer and other vehicles using the battery as power energy.

Specifically, the battery self-heating method includes the following steps.

At step S101, a temperature and a state of charge of a battery are obtained.

According to some embodiments, a battery refers to a device that converts chemical energy into electric energy. The battery does not specifically refer to a specific battery. For example, when the vehicle changes, the battery may change. When a type of the battery changes, the battery may also change. For example, the battery may be a battery pack.

In some embodiments, the state of charge (SOC) refers to a state of available electric energy in the battery. This state of charge does not specifically refer to a specific state. For example, when the battery changes, the state of charge may change. When the vehicle changes, the state of charge may also change.

It is easy to understand that the vehicle may obtain the temperature and the state of charge of the battery during the self-heating of the battery by the vehicle.

At step S 102, a current amplitude and a frequency during the self-heating of the battery is determined according to the temperature and the state of charge.

According to some embodiments, the current amplitude refers to a specific value of an AC current during the self-heating of the battery. The current amplitude does not specifically refer to a specific amplitude. For example, when the temperature changes, the current amplitude may change. When the state of charge changes, the current amplitude may also change.

In some embodiments, the frequency refers to a frequency of an AC current during the self-heating of the battery. The frequency does not specifically refer to a specific frequency. For example, when the temperature changes, the frequency may change. When the state of charge changes, the frequency may also change.

It is easy to understand that when the vehicle obtains the temperature and the state of charge of the battery, the vehicle may determine the current amplitude and the frequency during the self-heating of the battery according to the temperature and the state of charge.

At step S103, the battery self-heating device is subjected to a closed-loop control according to the current amplitude and the frequency, so as to self-heat the battery.

According to some embodiments, the battery self-heating device refers to a device used when self-heating the battery. The battery self-heating device does not specifically refer to a specific device. For example, when a structure of the battery changes, the battery self-heating device may change. When the vehicle changes, the battery self-heating device may also change.

In some embodiments, the closed-loop control refers to a control mode in which an output to be controlled returns to an input end of the control in a certain way and exerts a control influence on the input end.

It is easy to understand that when the vehicle obtains the current amplitude and the frequency during the self-heating of the battery, the vehicle may perform the closed-loop control on the battery self-heating device according to the current amplitude and the frequency, so as to self-heat the battery.

To sum up, in the method according to the embodiments of the present invention, the temperature and the state of charge of the battery are obtained, the current amplitude and the frequency during the self-heating of the battery are determined according to the temperature and the state of charge, and the battery self-heating device is subjected to the closed-loop control according to the current amplitude and the frequency, so as to self-heat the battery. Therefore, the battery self-heating device is subjected to the closed-loop control according to the temperature and the state of charge of the battery, so as to self-heat the battery, such that the current excitation can be applied to the battery by using the impedance characteristics of the battery at different frequencies, thus self-heating the battery, which can improve the self-heating efficiency of the battery and reduce the power consumption.

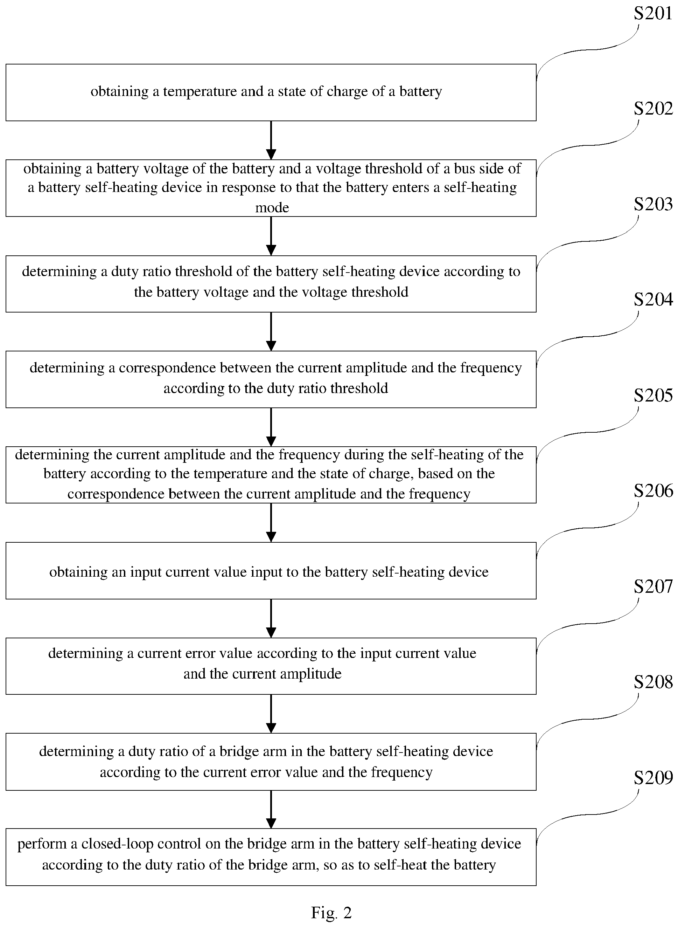

Referring to Fig. 2, Fig. 2 shows a flow chart of a second battery self-heating method according to the embodiments of the present invention. Specifically, the battery self-heating method includes the following steps.

At step S201, a temperature and a state of charge of a battery are obtained.

According to some embodiments, when the vehicle obtains the temperature of the battery, the temperature of the battery may be monitored by a temperature sensor arranged around the battery, so as to obtain the temperature of the battery.

According to some embodiments, when the vehicle obtains the state of charge of the battery, the vehicle may, for example, collect a battery voltage $V_{bat}$ of the battery and obtain the state of charge of the battery by referring to a change curve of the battery voltage with the state of charge.

In some embodiments, the vehicle may detect the battery voltage of the battery by arranging voltage sensors at two ends of the battery.

It is easy to understand that the vehicle may obtain the temperature and the state of charge of the battery when self-heating the battery.

At step S202, a battery voltage of the battery and a voltage threshold of a bus side of a battery self-heating device are obtained in response to that the battery enters a self-heating mode.

According to some embodiments, the voltage threshold $V_{bus}$ is a maximum voltage allowed by the bus side of the battery self-heating device. The voltage threshold does not specifically refer to a specific threshold. For example, when the battery self-heating device changes, the voltage threshold may change. When a threshold modification instruction for the voltage threshold is obtained, the voltage threshold may also change.

It is easy to understand that when the vehicle performs the self-heating of the battery, the vehicle may obtain the battery voltage $V_{bat}$ of the battery and the voltage threshold $V_{bus}$ of the bus side of the battery self-heating device in response to the battery entering the self-heating mode.

At step S203, a duty ratio threshold of the battery self-heating device is determined according to the battery voltage and the voltage threshold.

According to some embodiments, the duty ratio threshold $D_{max}$ is a maximum duty ratio allowed by the battery self-heating device. The duty ratio threshold does not specifically refer to a specific threshold. For example, when the battery self-heating device changes, the duty ratio threshold may change. When a threshold modification instruction for the duty ratio threshold is obtained, the duty ratio threshold may also change.

In some embodiments, a self-heating equivalent circuit of the battery self-heating device is a boost circuit, such that a voltage of a bus capacitor side of the battery self-heating device is denoted as $V_C = V_{bat}/(1 - D)$, where $D$ is a duty ratio of the bridge arm in the battery self-heating device. Thus, the vehicle may determine the duty ratio threshold $D_{max}$ of the battery self-heating device according to the following formula:

$$D_{max} = 1 - V_{bus}/V_{bat}$$

It is easy to understand that when the vehicle obtains the battery voltage $V_{bat}$ of the battery and the voltage threshold $V_{bus}$ of the bus side of the battery self-heating device, the vehicle may determine the duty ratio threshold $D_{max}$ of the battery self-heating device according to the battery voltage $V_{bat}$ and the voltage threshold $V_{bus}$.

At step S204, a correspondence between the current amplitude and the frequency is determined according to the duty ratio threshold.

According to some embodiments, when the vehicle determines the correspondence between the current amplitude and the frequency according to the duty ratio threshold, the vehicle may first determine a duty ratio DC component function and a duty ratio AC component function according to the duty ratio threshold, and then, the vehicle may determine the correspondence between the current amplitude and the frequency according to the duty ratio DC component function and the duty ratio AC component function.

In some embodiments, when the vehicle determines the duty ratio DC component function and the duty ratio AC component function according to the duty ratio threshold, the vehicle may determine the corresponding duty ratio DC component function and the corresponding duty ratio AC component function according to different control modes. These control modes include but are not limited to a sine current control mode, a cosine current control mode, a triangular wave current control mode, a square wave current control mode, etc.

For example, when the vehicle determines the duty ratio DC component function and the duty ratio AC component function according to the sine current control mode, the vehicle may determine the duty ratio DC component function as $Dz = 0.5 * D_{max}$, and the duty ratio AC component function as $Da = 0.5 * D_{max} * \sin(2 * \pi * f * t)$.

$Dz$ is the duty ratio DC component, $Da$ is the duty ratio AC component, $f$ is the frequency, and t is the time.

Then, the vehicle may obtain a correspondence between the voltage of the bus capacitor and the time according to the voltage formula of the boost circuit:

$$V_{bus} = \frac{V_{bat}}{1-Dz-Da} = \frac{V_{bat}}{1-0.5*D_{max}-0.5*D_{max}*\sin(2*\pi*f*t)}$$

Secondly, according to a correspondence between a capacitor current and a capacitor voltage, a correspondence between the capacitor current and the time may be obtained:

$$I_C = C\frac{dV_{bus}}{dt} = C * V_{bat} * \frac{0.5*D_{max}*2*\pi*f*\cos(2*\pi*f*t)}{[1-0.5*D_{max}-0.5*D_{max}*\sin(2*\pi*f*t)]^2}$$

$C$ is a capacitance value of the bus capacitor, and $I_C$ is the capacitor current.

Finally, a current frequency during the self-heating of the battery is far less than a switching frequency of the bridge arm, such that the current of the bus capacitor is similar to a current of the battery, i.e., a high-frequency switching current of the bridge arm can be ignored. Therefore, a peak-to-peak value of the capacitor current $I_{Cpp}$ is about equal to the current amplitude $I_{pp}$, and thus, a correspondence between the current amplitude $I_{pp}$ and the frequency $f$ may be obtained according to the correspondence between the capacitor current and the time:

$$I_{Cpp} = I_{pp} = C * V_{bat} * \frac{D_{max}*\pi*f}{(1-0.5*D_{max})^2} = C * V_{bat} * \frac{\left(1-\frac{V_{bus}}{V_{bat}}\right)*\pi*f}{(0.5*\frac{V_{bus}}{V_{bat}}-0.5)^2}$$

It is easy to understand that when the vehicle obtains the duty ratio threshold $D_{max}$ of the battery self-heating device, the vehicle may determine the correspondence between the current amplitude and the frequency according to the duty ratio threshold $D_{max}$.

At step S205, based on the correspondence between the current amplitude and the frequency, the current amplitude and the frequency during the self-heating of the battery are determined according to the temperature and the state of charge.

According to some embodiments, an impedance of the battery decreases with the increase of the frequency $f$, i.e., less heat is generated under the same current. Therefore, when determining the current amplitude and the frequency during the self-heating of the battery according to the temperature and the state of charge and based on the correspondence between the current amplitude and the frequency, a heating speed of the battery under the current state of charge is first determined according to the temperature, the state of charge and a current capacity of the bus capacitor, and then, according to the heating speed, the current amplitude and the frequency during the self-heating of the battery are selected based on the correspondence between the current amplitude and the frequency.

It is easy to understand that when the vehicle obtains the correspondence between the current amplitude and the frequency, the vehicle may determine the current amplitude and the frequency during the self-heating of the battery according to the temperature and the state of charge, based on the correspondence between the current amplitude and the frequency.

At step S206, an input current value input to the battery self-heating device is obtained.

According to some embodiments, the input current value does not specifically refer to a specific value. The input current value includes a first phase current value, a second phase current value and a third phase current value.

In some embodiments, when the vehicle performs the self-heating on the battery, the vehicle controls the battery self-heating device to self-heat the battery according to a current input from the motor. Output ends of three coils in the motor are connected to corresponding midpoints of three bridge arms in the battery self-heating device, respectively, the coils are in a one-to-one correspondence with the bridge arms, and each coil outputs a corresponding current to the corresponding bridge arm.

It is easy to understand that when the vehicle obtains the current amplitude and the frequency during the self-heating of the battery and self-heats the battery, the vehicle may obtain the input current value input to the battery self-heating device.

At step S207, a current error value is determined according to the input current value and the current amplitude.

According to some embodiments, when the vehicle determines the current error value according to the input current value and the current amplitude, the vehicle may first sum the first phase current value, the second phase current value and the third phase current value, so as to obtain a total value of the three phase currents, and then, the vehicle may obtain a difference between the total value of the three phase currents and the current amplitude, so as to obtain the current error value.

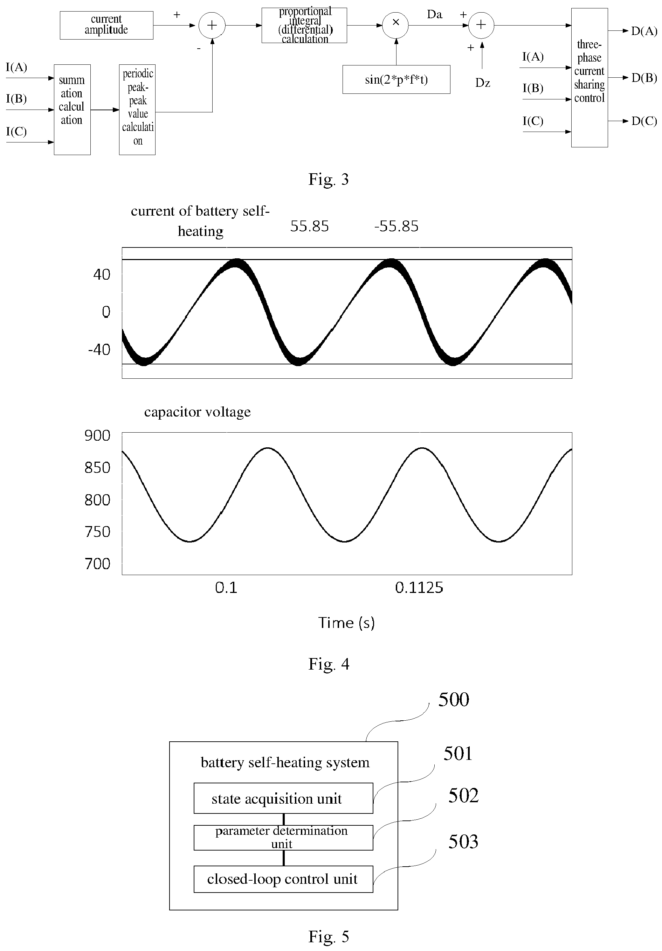

In some embodiments, Fig. 3 shows a control flow chart of the battery self-heating device according to embodiments of the present invention. As shown in Fig. 3, the vehicle may sum the first phase current value I(A), the second phase current value I(B) and the third phase current value I(C), so as to obtain the total value of the three phase currents. Then, the vehicle may determine a periodic peak-to-peak value of the total value of the three phase currents. Then, the vehicle may obtain a difference between the periodic peak-to-peak value and the current amplitude $I_{pp}$, so as to obtain the current error value.

It is easy to understand that when the vehicle obtains the input current value input to the battery self-heating device, the vehicle may determine the current error value according to the input current value and the current amplitude.

At step S208, a duty ratio of the bridge arm is determined according to the current error value and the frequency.

According to some embodiments, as shown in Fig. 3, when the vehicle determines the duty ratio of the bridge arm according to the current error value and the frequency, the vehicle may perform a proportional integral calculation or a proportional integral differential calculation on the current error value, so as to obtain a duty ratio AC component amplitude. Then, the vehicle may determine an AC function of the frequency $f$ based on the correspondence between the current amplitude and the frequency, and multiply the duty ratio AC component amplitude with the AC function, so as to obtain the duty ratio AC component $Da$. Finally, the vehicle may determine the duty ratio DC component $Dz$ of the battery self-heating device, and determine the duty ratio of the bridge arm according to the duty ratio DC component $Dz$ and the duty ratio AC component $Da$.

In some embodiments, the AC function of the frequency $f$ refers to an AC function in which the frequency $f$ is an angular frequency and an amplitude is 1.

In some embodiments, if $D$ is a duty ratio of the lower bridge arm, the duty ratio of the bridge arm, which is determined by the vehicle according to the duty ratio DC component $Dz$ and the duty ratio AC component $Da$, is the duty ratio of the lower bridge arm. If $D$ is a duty ratio of the upper bridge arm, the duty ratio of the bridge arm, which is determined by the vehicle according to the duty ratio DC component $Dz$ and the duty ratio AC component $Da$, is the duty ratio of the upper bridge arm.

In some embodiments, the duty ratio of the upper bridge arm and the duty ratio of the lower bridge arm are complementary relative to each other, such that the duty ratio of the lower bridge arm may be determined according to the duty ratio of the upper bridge arm, or the duty ratio of the upper bridge arm may be determined according to the duty ratio of the lower bridge arm.

It is easy to understand that when the vehicle obtains the current error value, the vehicle may determine the duty ratio of the bridge arm according to the current error value and the frequency.

At step S209, the bridge arm in the battery self-heating device is subjected to a closed-loop control according to the duty ratio of the bridge arm, so as to self-heat the battery.

According to some embodiments, when the vehicle performs the closed-loop control on the bridge arm in the battery self-heating device, in order to ensure the balance of the three phase currents, a three-phase current sharing control may be performed additionally, i.e., by comparing an actual current of each phase in the three phase currents with an average current of the three phase currents, the duty ratio of each phase is correspondingly fine-tuned based on the average current, and finally, independent duty ratios of three phase bridge arms are obtained.

In some embodiments, as shown in Fig. 3, when the vehicle performs the closed-loop control on the bridge arm in the battery self-heating device according to the duty ratio of the bridge arm, the vehicle may first convert the duty ratio of the bridge arm into a duty ratio of a first phase bridge arm, a duty ratio of a second phase bridge arm and a duty ratio of a third phase bridge arm according to the input current value, and then, the vehicle may perform the closed-loop control on the bridge arm in the battery self-heating device according to the duty ratio of the first phase bridge arm, the duty ratio of the second phase bridge arm and the duty ratio of the third phase bridge arm, respectively.

According to some embodiments, Fig. 4 shows a simulation diagram of the battery self-heating according to the embodiments of the present invention. As shown in Fig. 4, the battery voltage $V_{bat}$ is 720 V, a bus capacitance C is 1 mF, the voltage threshold $V_{bus}$, i.e., a maximum voltage of the bus capacitor is 900 V, and the frequency $f$ during the self-heating of the battery is selected to be 100 Hz. According to the correspondence between the current amplitude and the frequency, the allowable current amplitude (a current peak-to-peak value) $I_{pp}$ during the self-heating of the battery may be calculated to be 55.85A. Then, the simulation is performed according to the method according to the embodiments of the present invention, so as to obtain waveforms shown in Fig. 4.

In some embodiments, as shown in Fig. 4, the capacitor voltage does not exceed 900 V, the current of the battery is a approximately sinusoidal current waveform, and the current peak-to-peak value of the battery is the current amplitude $I_{pp}$, i.e. 55.85 A. In other words, the simulated AC current waveform may be configured for the self-heating of the battery.

It is easy to understand that when the vehicle obtains the duty ratio of the bridge arm, the vehicle may perform the closed-loop control on the bridge arm in the battery self-heating device according to the duty ratio of the bridge arm, so as to self-heat the battery.

To sum up, in the method according to embodiments of the present invention, the temperature and the state of charge of the battery are first obtained, the battery voltage of the battery and the voltage threshold of the bus side of the battery self-heating device are obtained in response to the battery entering the self-heating mode, the duty ratio threshold of the battery self-heating device is determined according to the battery voltage and the voltage threshold, the correspondence between the current amplitude and the frequency is determined according to the duty ratio threshold, and the current amplitude and the frequency during the self-heating of the battery are determined according to the temperature and the state of charge, based on the correspondence between the current amplitude and the frequency. Therefore, the accuracy of determining the current amplitude and the frequency during the self-heating of the battery may be improved. Then, the input current value input to the battery self-heating device is acquired, the current error value is determined according to the input current value and the current amplitude, the duty ratio of the bridge arm is determined according to the current error value and the frequency, and according to the duty ratio of the bridge arm, the bridge arm in the battery self-heating device is subjected to the closed-loop control, so as to self-heat the battery. Therefore, the battery self-heating device is subjected to the closed-loop control according to the AC current corresponding to the temperature and the state of charge of the battery, so as to self-heat the battery, such that the current excitation can be applied to the battery by using the impedance characteristics of the battery at different frequencies, thus self-heating the battery, which can improve the self-heating efficiency of the battery, realize a uniform heating speed and reduce the power consumption.

In the technical solutions of the present invention, the collection, storage, use, processing, transmission, provision and disclosure of personal information of a user involved all comply with the provisions of relevant laws and regulations, and do not violate public order and good customs.

The following describes embodiments of a system of the present invention, which may be configured to implement the embodiments of the method of the present invention. For details not disclosed in the embodiments of the system of the present invention, reference may be made to the embodiments of the method of the present invention.

Referring to Fig. 5, Fig. 5 shows a schematic view of a first battery self-heating system according to the embodiments of the present invention. The battery self-heating system may be completely or partially realized through a software, a hardware or a combination of both. The battery self-heating system 500 includes a state acquisition unit 501, a parameter determination unit 502 and a closed-loop control unit 503. The state acquisition unit 501 is configured to acquire a temperature and a state of charge of a battery, the parameter determination unit 502 is configured to determine a current amplitude and a frequency during the self-heating of the battery according to the temperature and the state of charge, and the closed-loop control unit 503 is configured to perform a closed-loop control on the battery self-heating device according to the current amplitude and the frequency, so as to self-heat the battery.

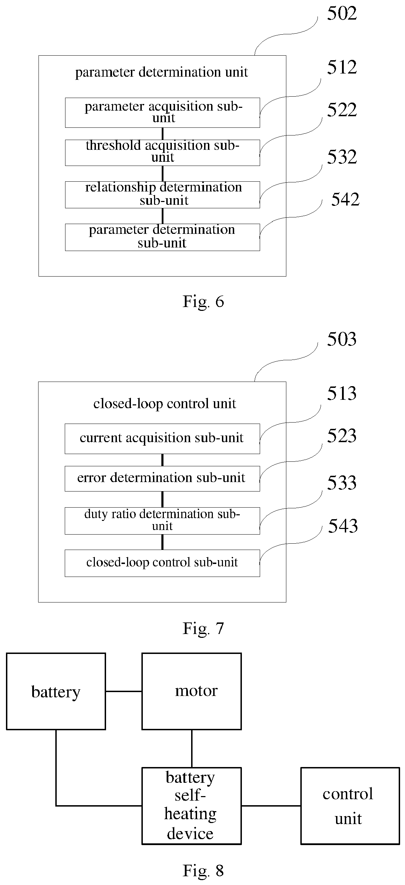

Fig. 6 shows a schematic view of a second battery self-heating system according to some embodiments of the present invention. As shown in Fig. 6, the parameter determination unit 502 includes a parameter acquisition sub-unit 512, a threshold acquisition sub-unit 522, a relationship determination sub-unit 532 and a parameter determination sub-unit 542. The parameter determination unit 502 is configured to determine the current amplitude and the frequency during the self-heating of the battery according to the temperature and the state of charge. The parameter acquisition sub-unit 512 is configured to obtain a battery voltage of the battery and a voltage threshold of a bus side of the battery self-heating device in response to that the battery enters a self-heating mode, the threshold acquisition sub-unit 522 is configured to determine a duty ratio threshold of the battery self-heating device according to the battery voltage and the voltage threshold, the relationship determination sub-unit 532 is configured to determine a correspondence between the current amplitude and the frequency according to the duty ratio threshold, and the parameter determination sub-unit 542 is configured to determine the current amplitude and the frequency during the self-heating of the battery according to the temperature and the state of charge, based on the correspondence between the current amplitude and the frequency.

In some embodiments, the relationship determination sub-unit 532 is configured to determine the correspondence between the current amplitude and the frequency according to the duty ratio threshold, and specifically configured to: determine a duty ratio DC component function and a duty ratio AC component function according to the duty ratio threshold; and determine the correspondence between the current amplitude and the frequency according to the duty ratio DC component function and the duty ratio AC component function.

Fig. 7 shows a schematic view of a third battery self-heating system according to some embodiments of the present invention. As shown in Fig. 7, the closed-loop control unit 503 includes a current acquisition sub-unit 513, an error determination sub-unit 523, a duty ratio determination sub-unit 533 and a closed-loop control sub-unit 543. The closed-loop control unit 503 is configured to perform the closed-loop control on the battery self-heating device according to the current amplitude and the frequency. The current acquisition sub-unit 513 is configured to acquire an input current value input to the battery self-heating device, the input current value includes a first phase current value, a second phase current value and a third phase current value. The error determination sub-unit 523 is configured to determine a current error value according to the input current value and the current amplitude. The duty ratio determination sub-unit 533 is configured to determine a duty ratio of a bridge arm in the battery self-heating device according to the current error value and the frequency. The closed-loop control sub-unit 543 is configured to perform the closed-loop control on the bridge arm in the battery self-heating device according to the duty ratio of the bridge arm.

In some embodiments, the error determination sub-unit 523 is configured to determine the current error value according to the input current value and the current amplitude, and specifically configured to: sum the first phase current value, the second phase current value and the third phase current value, so as to obtain a total value of the three phase currents; and obtain a difference between the total value of the three phase currents and the current amplitude, so as to obtain the current error value.

In some embodiments, when the duty ratio determination sub-unit 533 is configured to determine the duty ratio of the bridge arm according to the current error value and the frequency, and specifically configured to: perform a proportional integral calculation or a proportional integral differential calculation on the current error value, so as to obtain a duty ratio AC component amplitude; determine an AC function of the frequency based on a correspondence between the current amplitude and the frequency, and multiply the duty ratio AC component amplitude with the AC function, so as to obtain a duty ratio AC component; and determine a duty ratio DC component of the battery self-heating device, and determine the duty ratio of the bridge arm according to the duty ratio DC component and the duty ratio AC component.

In some embodiments, the closed-loop control sub-unit 543 is configured to perform the closed-loop control on the bridge arm in the battery self-heating device according to the duty ratio of the bridge arm, and specifically configured to: convert the duty ratio of the bridge arm into a duty ratio of a first phase bridge arm, a duty ratio of a second phase bridge arm and a duty ratio of a third phase bridge arm according to the input current value; and perform the closed-loop control on the bridge arm in the battery self-heating device according to the duty ratio of the first phase bridge arm, the duty ratio of the second phase bridge arm and the duty ratio of the third phase bridge arm, respectively.

It should be noted that when the battery self-heating system according to the above embodiments performs the battery self-heating method, the division of the above respective functional modules is illustrated only as an example. In practical applications, the above functions may be allocated to different functional modules according to needs, i.e., the internal structure of the device may be divided into different functional modules to complete all or part of the functions described above. In addition, the battery self-heating system according to the above embodiments has the same concept as the battery self-heating method. For the implementation process of the battery self-heating system, reference may be made to the embodiments of the method, which is not repeated here.

To sum up, in the system according to embodiments of the present invention, the state acquisition unit obtains the temperature and the state of charge of the battery, the parameter determination unit determines the current amplitude and the frequency during the self-heating of the battery according to the temperature and the state of charge, and the closed-loop control unit preforms the closed-loop control on the battery self-heating device according to the current amplitude and the frequency, so as to self-heat the battery. Therefore, the battery self-heating device is subjected to the closed-loop control according the temperature and the state of charge of the battery, so as to self-heat the battery, such that the current excitation may be applied to the battery by using the impedance characteristics of the battery at different frequencies, thus self-heating the battery, which can improve the self-heating efficiency of the battery and reduce the power consumption.

In the technical solutions of the present invention, the collection, storage, use, processing, transmission, provision and disclosure of personal information of a user involved all comply with the provisions of relevant laws and regulations, and do not violate public order and good customs.

According to embodiments of the present invention, the present invention also provides a vehicle, which may be configured to implement the embodiments of the method of the present invention. For details not disclosed in the embodiments of the vehicle of the present invention, reference may be made to the embodiments of the method of the present invention.

Referring to Fig. 8, Fig. 8 shows a schematic view of a first vehicle according to embodiments of the present invention.

Specifically, the vehicle includes a battery, a battery self-heating device, a motor and a control unit. A first end of the motor is connected to a positive electrode of the battery, a second end of the motor is connected to a first end of the battery self-heating device, and a negative electrode of the battery is connected to a second end of the battery self-heating device. The control unit is connected to the battery self-heating device, and configured to control the battery self-heating device to self-heat the battery according to a current input from the motor.

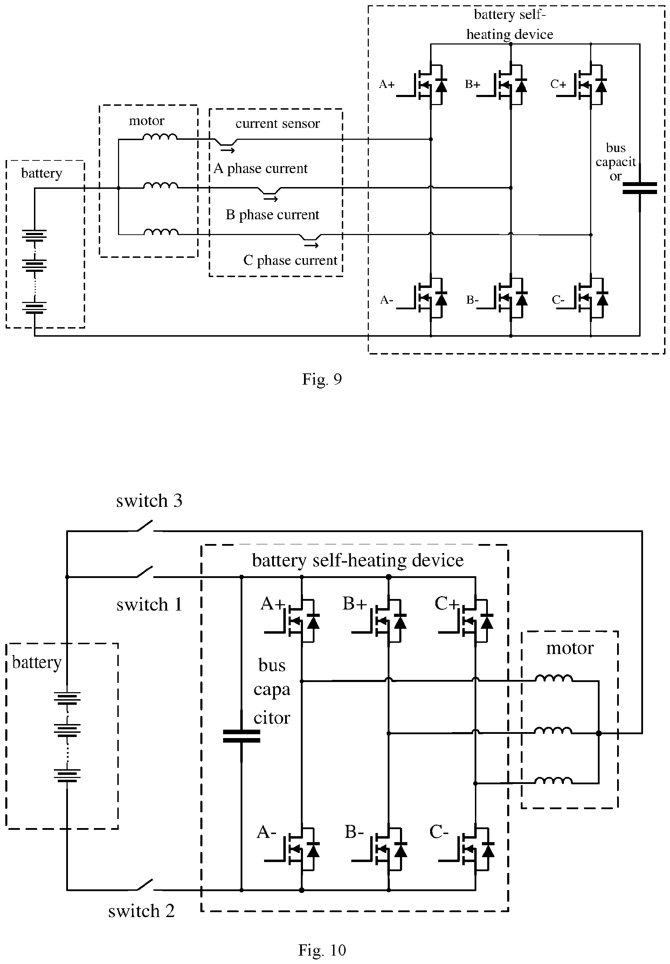

Fig. 9 shows a schematic view of a second vehicle according to some embodiments of the present invention. As shown in Fig. 9, the battery self-heating device includes three bridge arms and a bus capacitor. Three bridge arm midpoints of the three bridge arms are connected to the second end of the motor, respectively, first ends of the three bridge arms are connected to a positive electrode of the bus capacitor, respectively, and control ends of the three bridge arms are connected to the control unit, respectively. Second ends of the three bridge arms are connected to a negative electrode of the bus capacitor, respectively, to form the second end of the battery self-heating device.

According to some embodiments, as shown in Fig. 9, the three bridge arms are a first phase bridge arm, a second phase bridge arm and a third phase bridge arm. The first phase bridge arm includes a first upper bridge arm switch A+ and a first lower bridge arm switch A-, the second phase bridge arm includes a second upper bridge arm switch B+ and a second lower bridge arm switch B-, and the third phase bridge arm includes a third upper bridge arm switch C+ and a third lower bridge arm switch C-.

In some embodiments, as shown in Fig. 9, a first end of the first upper bridge arm switch A+, a first end of the second upper bridge arm switch B+ and a first end of the third upper bridge arm switch C+ are connected to the positive electrode of the bus capacitor, respectively, to form a positive DC end of the battery self-heating device. A second end of the first lower bridge arm switch A-, a second end of the second lower bridge arm switch B- and a second end of the third lower bridge arm switch C- are connected to the negative electrode of the bus capacitor, respectively, to form a negative DC end (i.e., the second end) of the battery self-heating device.

The positive DC end of the battery self-heating device and the negative DC end of the battery self-heating device are a bus side of the battery self-heating device.

A second end of the first upper bridge arm switch A+ and a first end of the first lower bridge arm switch A- are connected to form a bridge arm midpoint of the first phase bridge arm, a second end of the second upper bridge arm switch B+ and a first end of the second lower bridge arm switch B- are connected to form a bridge arm midpoint of the second phase bridge arm, and a second end of the third upper bridge arm switch C+ and a first end of the third lower bridge arm switch C- are connected to form a bridge arm midpoint of the third phase bridge arm.

In some embodiments, the bridge arm switch, such as the first upper bridge arm switch A+, the first lower bridge arm switch A-, the second upper bridge arm switch B+, the second lower bridge arm switch B-, the third upper bridge arm switch C+ and the third lower bridge arm switch C-, does not refer to a specific switch. The bridge arm switch includes but is not limited to a bipolar junction transistor (BJT), a gate turn-off thyristor (GTO), an insulated gate bipolar transistor (IGBT), an integrated gate commutated transistor (IGCT), a metal-oxide semiconductor field effect transistor (MOSFET), a SiC MOSFET, etc.

For example, when the bridge arm switch is the MOSFET, a drain electrode of the MOSFET is a first end of the bridge arm switch, a source electrode of the MOSFET is a second end of the bridge arm switch, and a gate electrode of the MOSFET is a control end of the bridge arm switch.

The control end of the bridge arm switch is a control end of the bridge arm.

According to some embodiments, as shown in Fig. 9, the motor may be a three-phase AC motor, and includes a first coil, a second coil and a third coil. A second end of the first coil is connected to the bridge arm midpoint of the first phase bridge arm, a second end of the second coil is connected to the bridge arm midpoint of the second phase bridge arm, and a second end of the third coil is connected to the bridge arm midpoint of the third phase bridge arm. A first end of the first coil, a first end of the second coil and a first end of the third coil are connected to form a center tap (i.e., the first end) of the motor.

According to some embodiments, as shown in Fig. 9, the vehicle also includes three current sensors. First ends of the three current sensors are connected to the second end of the motor, respectively, second ends of the three current sensors are connected to the three bridge arm midpoints of the three bridge arms, respectively, and the current sensors are in a one-to-one correspondence with the bridge arms.

In some embodiments, the control unit is connected to third ends of the three current sensors, respectively, so as to perform the closed-loop control on the battery self-heating device according to a current value input by the current sensors.

Fig. 10 shows a schematic view of a third vehicle according to embodiments of the present invention. As shown in Fig. 10, the vehicle also includes switch 1, switch 2 and switch 3. A first end of switch 1 is connected to the positive electrode of the battery, and a second end of switch 1 is connected to the positive DC end (i.e., the first end) of the battery self-heating device. A first end of switch 2 is connected to the negative electrode of the battery, and a second end of switch 2 is connected to the negative DC end (i.e., the second end) of the battery self-heating device. A first end of switch 3 is connected to the positive electrode of the battery, and a second end of switch 3 is connected to the first end of the motor.

A control end of switch 1, a control end of switch 2 and a control end of switch 3 are connected to the control unit.

According to some embodiments, each of switch 1, switch 2 and switch 3 may be, for example, a relay. Switch 1 is a main positive relay of the battery in the vehicle, and switch 2 is a main negative relay of the battery in the vehicle.

In some embodiments, when the vehicle enters the battery self-heating mode, the control unit controls switch 1 to open, switch 2 to open, and switch 3 to close. When the vehicle enters a driving state, the control unit controls switch 1 to close, switch 2 to close, and switch 3 to open. Therefore, an original electric driving system inside the vehicle may be reused to self-heat the battery, without providing additional battery self-heating devices, which can reduce the cost of the vehicle.

To sum up, the vehicle according to embodiments of the present invention includes the battery, the battery self-heating device, the motor and the control unit. The first end of the motor is connected to the positive electrode of the battery, the second end of the motor is connected to the first end of the battery self-heating device, the negative electrode of the battery is connected to the second end of the battery self-heating device, and the control unit is connected to the battery self-heating device, to control the battery self-heating device to self-heat the battery according to the current input by the motor. Therefore, the control unit performs the closed-loop control on the battery self-heating device according the temperature and the state of charge of the battery, so as to self-heat the battery, such that the current excitation may be applied to the battery by using the impedance characteristics of the battery at different frequencies, thus self-heating the battery, which can improve the self-heating efficiency of the battery and reduce the power consumption.

In the technical solutions of the present invention, the collection, storage, use, processing, transmission, provision and disclosure of personal information of a user involved all comply with the provisions of relevant laws and regulations, and do not violate public order and good customs.

According to embodiments of the present invention, the present invention also provides a vehicle, a readable storage medium and a computer program product.

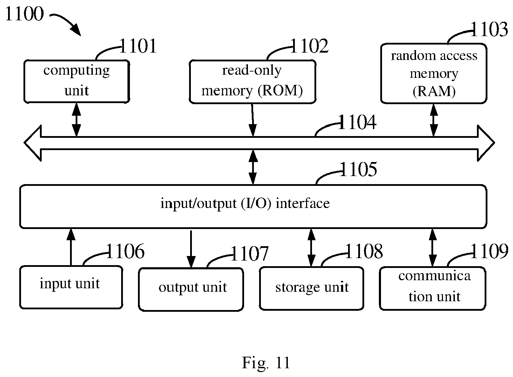

Fig. 11 shows a schematic block diagram of an illustrative vehicle 1100 configured to implement the embodiments of the present invention. Components shown herein, their connections and relationships, as well as their functions are only illustrative, and are not intended to limit the implementation of the present invention described and/or required herein.

As shown in Fig. 11, the vehicle 1100 includes a computing unit 1101, and the computing unit 1101 may perform various appropriate actions and processing according to a computer program stored in a read-only memory (ROM) 1102 or a computer program loaded into a random access memory (RAM) 1103 from a storage unit 1108. The RAM 1103 may also store various programs and data required for the operation of the vehicle 1100. The computing unit 1101, the ROM 1102 and the RAM 1103 are connected to each other through a bus 1104. An input/output (I/O) interface 1105 is also connected to the bus 1104.

A plurality of components in the vehicle 1100 are connected to the I/O interface 1105, and include: an input unit 1106, such as a keyboard, a mouse, etc; an output unit 1107, such as various types of displays, speakers, etc; a storage unit 1108, such as a disk, an optical disk, etc; and a communication unit 1109, such as a network card, a modem, a wireless communication transceiver, etc. The communication unit 1109 allows the vehicle 1100 to exchange information/data with other devices through a computer network such as the Internet and/or various telecommunication networks.

The computing unit 1101 may include a variety of general and/or dedicated processing components having processing and computing capabilities. Some examples of the computing unit 1101 include, but are not limited to, a central processing unit (CPU), a graphics processing unit (GPU), various dedicated artificial intelligence (AI) computing chips, various computing units running machine learning model algorithms, a digital signal processor (DSP), and any appropriate processors, controllers, microcontrollers, etc. The computing unit 1101 performs various methods and processes described above, such as the battery self-heating method. For example, in some embodiments, the battery self-heating method may be implemented as a computer software program, and is physically contained in a machine-readable medium, such as the storage unit 1108. In some embodiments, part or all of the computer program may be loaded into and/or installed on the vehicle 1100 via the ROM 1102 and/or the communication unit 1109. When the computer program is loaded into the RAM 1103 and executed by the computing unit 1101, one or more steps of the battery self-heating method described above may be performed. Alternatively, in other embodiments, the computing unit 1101 may be configured to perform the battery self-heating method in any other suitable manners (e. g., by means of a firmware).

Various implementations of the system and technology described above may be realized in a digital electronic circuit system, an integrated circuit system, a field programmable gate array (FPGA), a special integrated circuit (ASIC), a special standard product (ASSP), a system on chip (SOC), a complex programmable logic device (CPLD), a computer hardware, a firmware, a software, and/or their combination. These various implementations may include: being implemented in one or more computer programs. The one or more computer programs may be executed and/or interpreted on a programmable system including at least one programmable processor. The programmable processor may be a dedicated or general programmable processor, may receive data and instructions from a storage system, at least one input device, and at least one output device, and transmit data and instructions to the storage system, the at least one input device, and the at least one output device.

A program code configured to implement the method of the present invention may be written in any combination of one or more programming languages. The program code may be provided to the processor or the controller of the general computer, the dedicated computer or other programmable data processing devices, such that when the program code is executed by the processor or the controller, a function/an operation specified in the flow chart and/or the block diagram may be implemented. The program code may be completely executed on the machine, partially executed on the machine, partially executed on the machine as an independent software package, and partially executed on a remote machine or completely executed on the remote machine or a server.

In the context of the present invention, the machine-readable medium may be a physical medium, and may contain or store a program for use by or in combination with an instruction execution system, a device or an apparatus. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination of the above. More specific examples of the machine-readable storage medium may include an electrical connection based on one or more lines, a portable computer disk, a hard disk, a random access memory (RAM), a read-only memory (ROM), an erasable programmable read-only memory (EPROM or a flash memory), an optical fiber, a convenient compact disk read-only memory (CD-ROM), an optical storage device, a magnetic storage device, or any suitable combination of the above.

In order to provide an interaction with the user, the system and technology described herein may be implemented on a computer. The computer has a display device (for example, a CRT (cathode ray tube) or LCD (liquid crystal display) monitor) configured to display information to the user; and a keyboard and a pointing device (for example, a mouse or a trackball), through which the user may provide an input to the computer. Other types of devices may also be configured to provide an interaction with the user. For example, a feedback provided to the user may be any form of sensing feedback (for example, a visual feedback, an auditory feedback, or a tactile feedback). The input from the user may be received in any form (including a sound input, a voice input or a tactile input).

The system and technology described herein may be implemented in a computing system including a background component (for example, as a data server), or a computing system including a middleware component (for example, an application server), or a computing system including a fore-end component (for example, a user computer with a graphical user interface or a web browser, through which the user may interact with the implementation of the system and technology described herein), or a computing system including any combination of the background component, the middleware component or the fore-end component. The components of the system may be connected to each other through the digital data communication (for example, a communication network) in any form or medium. Examples of the communication network include a local area network (LAN), a wide area network (WAN), an Internet and a blockchain network.

The computer system may include a client and a server. The client and the server are generally far away from each other and usually interact with each other through the communication network. A relationship between the client and the server is generated by the computer programs running on the corresponding computer and having the client-server relationship with each other. The server may be a cloud server, also known as a cloud computing server or a cloud host, which is a host product in the cloud computing service system, to solve the problems of difficult management and weak business scalability existing in a traditional physical host and a VPS service ("Virtual Private Server", or "VPS" for short). The server may also be a server of a distributed system or a server combined with a blockchain.

It should be understood that steps may be reordered, added or deleted by using various forms of processes shown above. For example, the steps recorded in the present invention may be performed in parallel, in sequence or in different orders, as long as the expected results of the technical solution disclosed in the present invention can be achieved, which is not limited herein.

The above specific implementations do not limit the protection scope of the present invention. Those skilled in the art should understand that various modifications, combinations, sub-combinations and substitutions may be made according to design requirements and other factors. Any modifications, equivalent replacements and improvements made within the principle of the present invention shall be included in the protection scope of the present invention as defined by the appended claims.

**Claims**

1. A battery self-heating method, comprising,

   obtaining (S101) a temperature and a state of charge of a battery;
   determining (S102) a current amplitude and a frequency during self-heating of the battery according to the temperature and the state of charge; and
   performing (S103) a closed-loop control on a battery self-heating device according to the current amplitude and the frequency, so as to self-heat the battery.

2. The method according to claim 1, wherein determining (S102) a current amplitude and a frequency during self-heating of the battery according to the temperature and the state of charge comprises:

   obtaining (S202) a battery voltage of the battery and a voltage threshold of a bus side of the battery self-heating device in response to the battery entering a self-heating mode;
   determining (S203) a duty ratio threshold of the battery self-heating device according to the battery voltage and the voltage threshold;
   determining (S204) a correspondence between the current amplitude and the frequency according to the duty ratio threshold; and

determining (S205) the current amplitude and the frequency during the self-heating of the battery according to the temperature and the state of charge, based on the correspondence between the current amplitude and the frequency.

3. The method according to claim 2, wherein determining (S204) a correspondence between the current amplitude and the frequency according to the duty ratio threshold comprises:

determining a duty ratio DC component function and a duty ratio AC component function according to the duty ratio threshold; and
determining the correspondence between the current amplitude and the frequency according to the duty ratio DC component function and the duty ratio AC component function.

4. The method according to claim 2 or 3, wherein preforming (S103) a closed-loop control on a battery self-heating device according to the current amplitude and the frequency comprises:

obtaining (S206) an input current value input to the battery self-heating device, the input current value comprising a first phase current value, a second phase current value and a third phase current value;
determining (S207) a current error value according to the input current value and the current amplitude;
determining (S208) a duty ratio of a bridge arm in the battery self-heating device according to the current error value and the frequency; and
performing (S209) a closed-loop control on the bridge arm in the battery self-heating device according to the duty ratio of the bridge arm.

5. The method according to claim 4, wherein determining (S207) a current error value according to the input current value and the current amplitude comprises:

summing the first phase current value, the second phase current value and the third phase current value, so as to obtain a total value of the three phase currents; and
obtaining a difference between the total value of the three phase currents and the current amplitude, so as to obtain the current error value.

6. The method according to claim 4 or 5, wherein determining (S208) a duty ratio of a bridge arm in the battery self-heating device according to the current error value and the frequency comprises:

performing a proportional integral calculation or a proportional integral differential calculation on the current error value, so as to obtain a duty ratio AC component amplitude;
determining an AC function of the frequency based on the correspondence between the current amplitude and the frequency, and multiplying the duty ratio AC component amplitude with the AC function, so as to obtain a duty ratio AC component; and
determining a duty ratio DC component of the battery self-heating device, and determining the duty ratio of the bridge arm according to the duty ratio DC component and the duty ratio AC component.

7. The method according to any one of claims 4-6, wherein performing (S209) a closed-loop control on the bridge arm in the battery self-heating device according to the duty ratio of the bridge arm comprises:

converting the duty ratio of the bridge arm into a duty ratio of a first phase bridge arm, a duty ratio of a second phase bridge arm and a duty ratio of a third phase bridge arm according to the input current value; and
performing the closed-loop control on the bridge arm in the battery self-heating device respectively according to the duty ratio of the first phase bridge arm, the duty ratio of the second phase bridge arm and the duty ratio of the third phase bridge arm.

8. A vehicle, comprising:

a battery comprising a positive electrode and a negative electrode;
a battery self-heating device comprising a first end and a second end connected to the negative electrode of the battery;
a motor comprising a first end connected to the positive electrode of the battery and a second end connected to the first end of the battery self-heating device; and

a control unit,

wherein the control unit is connected to the battery self-heating device, and configured to control the battery self-heating device to self-heat the battery according to a current input from the motor, by using a battery self-heating method according to any one of claims 1-7.

9. The vehicle according to claim 8, wherein

the battery self-heating device comprises three bridge arms and a bus capacitor;

three bridge arm midpoints of the three bridge arms are connected to the second end of the motor, respectively, first ends of the three bridge arms are connected to a positive electrode of the bus capacitor, respectively, and control ends of the three bridge arms are connected to the control unit, respectively;

second ends of the three bridge arms are connected to a negative electrode of the bus capacitor, respectively, to form the second end of the battery self-heating device.

S101

obtaining a temperature and a state of charge of a
battery

S102

determining a current amplitude and a frequency during self-
heating of the battery according to the temperature and the
state of charge

S103

performing a closed-loop control on a battery self-heating
device according to the current amplitude and the frequency,
so as to self-heat the battery

Fig. 1

S201

obtaining a temperature and a state of charge of a battery

S202

obtaining a battery voltage of the battery and a voltage threshold of a bus side of a battery self-heating device in response to that the battery enters a self-heating mode

S203

determining a duty ratio threshold of the battery self-heating device according to the battery voltage and the voltage threshold

S204

determining a correspondence between the current amplitude and the frequency according to the duty ratio threshold

S205

determining the current amplitude and the frequency during the self-heating of the battery according to the temperature and the state of charge, based on the correspondence between the current amplitude and the frequency

S206

obtaining an input current value input to the battery self-heating device

S207

determining a current error value according to the input current value and the current amplitude

S208

determining a duty ratio of a bridge arm in the battery self-heating device according to the current error value and the frequency

S209

perform a closed-loop control on the bridge arm in the battery self-heating device according to the duty ratio of the bridge arm, so as to self-heat the battery

Fig. 2

Fig. 3

Fig. 4

Fig. 5

502

parameter determination unit

512

parameter acquisition sub-unit

522

threshold acquisition sub-unit

532

relationship determination sub-unit

542

parameter determination sub-unit

Fig. 6

503

closed-loop control unit

513

current acquisition sub-unit

523

error determination sub-unit

533

duty ratio determination sub-unit

543

closed-loop control sub-unit

Fig. 7

battery

motor

battery self-heating device

control unit

Fig. 8

Fig. 9

Fig. 10

1100

1101
computing unit

1102
read-only memory (ROM)

1103
random access memory (RAM)

1104

1105
input/output (I/O) interface

1106
input unit

1107
output unit

1108
storage unit

1109
communica tion unit

Fig. 11

Europäisches
Patentamt

European
Patent Office

Office européen
des brevets

# EUROPEAN SEARCH REPORT

Application Number

EP 23 16 4351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/238103 A1 (BYD CO LTD [CN]) 2 December 2021 (2021-12-02) * paragraph [0079] – paragraph [0178]; figures 1-10 * ––––– | 1-9 | INV. B60L58/27 |
| A | CN 113 752 875 A (BYD CO LTD) 7 December 2021 (2021-12-07) * paragraph [0076] – paragraph [0158]; figures 1-4 * ––––– | 1-9 | |

TECHNICAL FIELDS
SEARCHED (IPC)

B60L

The present search report has been drawn up for all claims

| Place of search | Date of completion of the search | Examiner |
|---|---|---|
| The Hague | 18 September 2023 | Altuntas, Mehmet |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 16 4351

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2023

| Patent document cited in search report | | Publication date | Patent family member(s) | | Publication date |
|---|---|---|---|---|---|
| WO 2021238103 | A1 | 02-12-2021 | BR 112022024118 | A2 | 27-12-2022 |
| | | | CA 3180352 | A1 | 02-12-2021 |
| | | | CN 113733987 | A | 03-12-2021 |
| | | | EP 4159533 | A1 | 05-04-2023 |
| | | | JP 2023527451 | A | 28-06-2023 |
| | | | US 2023238591 | A1 | 27-07-2023 |
| | | | WO 2021238103 | A1 | 02-12-2021 |
| CN 113752875 | A | 07-12-2021 | NONE | | |

EPO FORM P0459

For more details about this annex : see Official Journal of the European Patent Office, No. 12/82